# EUROPEAN PATENT SPECIFICATION

(11) **EP 4 114 671 B1**
(45) Date of publication and mention of the grant of the patent: **15.07.2026**
(21) Application number: 21708665.1
(22) Date of filing: 03.03.2021
(51) Int. Cl.: B60B 1/00, B60B 1/02, B60B 9/26, B60B 5/02, B60B 17/00, B65G 1/04

(54) **WHEEL**
RAD
ROUE

(30) Priority: 04.03.2020 GB 202003097; 04.03.2020 GB 202003110; 04.03.2020 GB 202003091; 01.06.2020 GB 202008190
(43) Date of publication of application: 11.01.2023
(73) Proprietor: Ocado Innovation Limited, Hatfield, Hertfordshire AL10 9UL (GB)
(72) Inventor: JOHANNISSON, Wilhelm, Hatfield Hertfordshire AL10 9UL (GB)
(74) Representative: Ocado Group IP Department
(86) International application number: PCT/EP2021/055398
(87) International publication number: WO 2021/175958

(56) References cited:
- EP-A2- 1 225 063
- EP-B1- 1 037 828
- WO-A1-2010/012091
- WO-A1-2017/117598
- WO-A1-2019/170805
- FR-A1- 2 623 141
- US-A- 3 610 652
- US-A1- 2011 272 254

## Description

### Field of the invention

The present invention relates to a wheel. More specifically the present invention relates to wheels for use on devices and machines used as material handling equipment (MHE).

### Background

The tire company Michelin, recently developed an airless tire design, named Tweel^{™}. The Tweel^{™} consists of a band of conventional tire rubber with molded tread, a shear beam just below the tread that creates a compliant contact patch with the road surface, a series of energy-absorbing polyurethane spokes, and an integral inner hub structure. The flexible spokes fulfil the shock-absorbing role provided by the compressed air in a traditional tire. The inner hub structure may be either rigid or compliant, depending on the application requirements. The tread can be as specialized as any conventional tires and is replaceable. The Tweel^{™} has been applied to mobility devices, Segway^{™}, construction and agricultural vehicles.

WO2010/012091A1 discloses the preamble of claim 1 and shows a reactive planar suspension for a wheel, comprising a substantially rigid rim, a substantially rigid hub disposed concentrically within the rim to define an annular space between the rim and rub, and suspension members disposed in the annular space and connected to the rim and the hum to allow the rim to move in one or both the horizontal and vertical directions relative to the hub in response to an input to the rim.

It is against this background that the present invention has been devised.

### Summary

A wheel for MHE (material handling equipment) is provided comprising: a hub; a rim; and spokes, wherein the spokes supportively connect the rim to the hub, wherein the spokes are arranged in a network and least some of the spokes are curved, and wherein at least a portion of the spokes are made from a compliant material relative to the material of the rim and or the hub, and the spokes are arranged in two or more layers, a first-type layer layered with at least one second-type layer of spokes where the second-type layer has curved spokes; wherein the rim comprises a channel for receiving a drive belt, or wherein the hub is for receiving a direct drive motor. In this way, a drive belt may be used with the wheel. Accordingly, the wheel or a set of wheels may be driven by a motor to provide MHE with motorised assistance, rather than manual pushing and pulling for example. In turn, this may make the MHE automatically or semi-automatically controllable within a system.

Material handling equipment (MHE) is mechanical equipment used for the movement, storage, control and protection of materials, goods and products throughout the process of manufacturing, distribution, consumption and disposal. The different types of handling equipment can be classified into four major categories: transport equipment, positioning equipment, unit load formation equipment, and storage equipment.

It will be appreciated that wheels are used throughout MHE to make many kinds of machines controllably movable and to transmit energy.

Typically wheels for MHE are solid or rigid disc type wheels and operate in warehouse type environments. The provision of a wheel having a compliant spoke material allows for suspension to be incorporated into the wheel. In this way, the wheels of MHE can more easily run over uneven surfaces and tracks. Further, without using a compresses air bladder as typically used for wheel tires which request suspension, there is no risk of the tire leaking pressure nor bursting, thus becoming more reliable. Further, the wheel with incorporated suspension the wheel is less likely to become damaged during normal operation. As a result, the wheel may require less maintenance, and may not need to be replaced as often thereby reducing capital costs and labour. Further, by replacing a solid disc type wheel with a spoked wheel the material requirement and cost is reduce. In this way, weight of the wheel is also reduced.

The wheel may comprise two or more layers, wherein a first-type layer having radial spokes may be layered with at least one second-type layer having curved spokes. Thus, the wheel may comprise a wheel assembly. The curved spokes may comprise a first set curved in a clockwise direction, and a second set curved in an anti-clockwise direction. The first-type layer may be sandwiched between two second-type layers.

The wheel may display a combination of characteristics where the characteristics of each of the layers contributes to the overall characteristics of the wheel. Each layer may be designed to optimise particular characteristics, and the layered or composite arrangement or wheel then displays all of the characteristics embodied by the layers.

In some situations, spokes may be referred to as wires. Wheels with spokes may be referred to as wire wheels or wire spoke wheels. Wire spokes typically function in tension to keep the rim true while providing support for loads applied to the wheel.

It will be appreciated that in some arrangements of spokes it may be possible to continue using the wheel even when some spokes are missing or damaged.

The design of the wheel means that the vertical and lateral stiffness of the wheel are not inherently linked. Thus, each direction of stiffness may be optimised independently. In this way, the wheel may have high lateral stiffness and have now vertical stiffness at the same time, for example. It follows that when the wheel is driven, it may be braked more efficiently. In turn this means that the wheel may be able to change direction more quickly and more efficiently.

At least a portion of the spoke network may be deformable and or compressible.

The provision of resilient deformation in the spokes rather than in a bladder or pneumatic type tire allows the wheel to have some suspension without the need for a tire. It will be appreciated that the wheel would not have any issues associated with ensuring that the tire pressure is correct. As rolling resistance of a wheel depends on deformation losses, which in turn depends on the nature of the ground or track, of the material of the wheel, it will be appreciated that the rolling resistance is more predictable a non-inflatable tire. In turn, the required torque to drive the wheel may be more predictable.

The spokes may comprise a first set curved in a clockwise direction, and a second set curved in an anti-clockwise direction.

In this way, the wheel may be used in forward and reverse rotational directions, and display similar characteristics in both directions.

The spoke network may be optimised for torsional stiffness.

By optimising torsional stiffness by choosing the best spoke arrangement, power transfer from a motor to the wheel may be optimised for efficiently. In turn, this way allow a smaller motor to be used.

Rim sides may be angled relative to the plane of the wheel.

MHE often run in tracks, rails or along defined paths. In some cases, the tracks may comprise channels in which wheels run. In order for such systems to operate effectively, it may be necessary to ensure that the MHE or wheels remain in the defined tracks. The provision of an angled rim helps to ensure that the wheels remain within the tracks. For example, instead of riding up and over the edge of the track or channel, the angled rim may prevent the wheel from riding up further, or the angled rim may deflect the wheel back into the track to be more centrally located within the track. Advantageously, the angled rim of the wheel may ensure that the MHE remains in the correct position during operation. In other words, the angled rim may ensure that the passage of a MHE along a track is "auto-correcting".

The rim may comprise a groove for receiving a tyre.

Typically, tires are ring-shaped coverings that fix around the rim of a wheel, to protect the rim (and wheel) and enable better performance of the device of the wheel. The tire may provide a flexible cushion that absorbs socks, for example due to uneven tracks, while keeping the wheel in close contact with the ground. In this way, additional suspension may be provided from a tire.

Further, the tread or contact patch of the wheel provides traction and the body of the tire provides support.

It is possible that the tire may wear faster than the rest of the wheel, in part due to the contact with the ground. By providing a grove where a tired may be readily replaced, the tire may be replaced quickly while the remaining parts of the wheel can continue to have a longer life. Further, it will be appreciated that this may reduce the time and labour cost for maintenance for replacing the tire.

Further, a tire may prevent damage to the rim itself. In some cases, it may be that a tire is cheaper to replace than services or replacing the rim of a wheel, accordingly capital cost may be reduce as a result of using the wheel on MHE. Also, by replacing only a relatively small proportion of the wheel, the wheel potentially reduces environmental impact, for example in comparison with disc wheels.

The groove may receive one or more O-rings.

O-rings are typically readily available and relatively cheap. O-rings may be used as a tire. O-rings are typically made from rubber. Using an O-ring as a tire may provide sufficient traction between the wheel and surface for MHE to operate.

The O-ring provides the contact point between the wheel and the tracks. Thus, the second-type layer may have an O-ring that provides the track-wheel interface. O-rings are typically made from rubber. This may provide a certain amount of suspension to the wheel. O-rings are readily available and may be easily replaced. It will be appreciated that any suitable material and arrangement may be used to provide a traction providing contact point between the wheel and the tracks. For example, a rubber strip may be attached to the rim.

In some cases, for example, heavier MHE, a larger contact point between the wheel and the surface may be required. The groove on the rim of the wheel, may be suitable for receiving more than one O-ring, arranged in side-by-side fashion for example. In this way, the wheel may be used for more types and variety of MHE whilst maintaining the advantages of the wheel suitable for lighter applications. Further, by having more than one O-ring, if one O-ring where to fail then the wheel has some redundancy and may continue to be operational before it is returned to a maintenance area.

The wheel may have more than one groove in the rim corresponding to the number of O-rings to be received. For example, the wheel may comprise three grooves for receiving three O-rings. Such a wheel may be usefully used when not all of the grooves are in receipt of O-rings. For example, a wheel having three grooves may be operational with two O-rings arranged in the outer grooves, or the wheel may be operation with a single O-ring arranged in the centre groove or in one of the outer grooves.

Having the option to provide the wheel with additional O-rings across the width or depth of the wheel provides the opportunity to increase the contact rubber between the wheel and the track. It will be appreciated that the wheel may necessarily require modifications in other respects in order to accommodate space for the additional space around the rim of the wheel that additional O-rings require. For example, it may be necessary to provide a different or modified drive arrangement.

The wheel may be directly drivable using a hub motor, for example. It will be appreciated that in order to accommodate a hub motor, the hub size of the wheel may be increased and accordingly the depth or length of the spokes may be reduced for a given size of wheel.

The spoke network may be optimised to minimise backlash between forward and reverse drive directions.

As is known, in a gear tooth drive arrangement, backlash is an error in motion that occurs when the direction of drive changes from forward to reverse, or vice versa. This exists because there is always a small gap between the training face of the drive tooth and the leading face of the tooth behind it on the driven belt, and that gap must be closed before force can be transferred in the new direction. The amount of backlash is dependent on the size of the gap. In an ideal drive belt/wheel arrangement there would be no gap between the teeth of the drive belt and the teeth of the wheel. However, this would require perfect manufacturing, and uniform dimensional characteristics throughout the system. At least some of the backlash that occurs during forward and reverse direction changes may be compensated by the wheel spoke design.

The arrangement of the spokes may be such that the amount of backlash is reduced. Thus, it is possible to make energy transfer to the wheel more efficient.

The first-type layer may be a pulley and may have a smaller diameter than the second-type layer thereby creating the channel into which a drive belt may be received. The rim of the first-type layer may comprise cog teeth for cooperating with a drive belt.

In this way, the first-type layer may be arranged not to contact or interface with the track and instead be part of the drive-train. While the first-type layer does not contact or interface with the track, and therefore does not support the load handling device, the first-type layer may provide the axle drive for the wheel and support the second-type layer. Thus, the first-type layer of an assembly may be part of the hub on to which the second-type layer is mounted for the track-wheel contact.

In this way, the first-type layer may be driven by a drive belt. The drive belt meshes with the first-type layer or pulley and may be used to drive the second-type layer or wheels of the load handling device to provide manoeuvrability. The arrangement of the drive belt in a groove or channel ensures that the drive belt remains in the correct position to mesh with the cog teeth. Having the wheel driven by a drive belt pulley may mean that there is more design freedom for the design of the wheel itself. The combined characteristics of each of the layers, together with the direct drive provided by the pulley/hub of the first-type layer may advantageously allow for the wheel to be driven with positional precision whilst also be resilient to step changes in the track, for example. In this way, the wheel may enable a load handling device to be driven to specific locations on a grid framework having a plurality of grid spaces.

The rim sides may be angled relative to the plane of the wheel.

The outer most surface of the wheel may be angled. In this way, the wheels are less likely to be derailed as it moves along the track. The angle of the rim face or sides may direct the wheel back into position and in contact with the track, if the wheel bounces on a bump in the track, for example, at a transition between grid spaces.

The spoke material may be polyurethane or nylon, and the hub and rim material maye nylon.

The materials that the wheel is made from may be selected in order to provide the characteristics required for a particular application. The material of the spokes may be inherently more flexible than the material chosen for the rim or hub. Or the flexibility of the spokes may be provided from the structure and or shape design.

The wheel may be 3-D printed.

The wheel or parts of the wheel may be 3D printed. Some 3D printers are able to print with more than one material, either separately or simultaneously. In some cases it is possible to print with a graduated transition of material from one to another, creating an item with a graded material composition. It will be appreciated that the behavioural characteristics of the wheel will also be graded or graduated according to the material composition. It will be appreciated that it is possible to create more complex structures using 3D printing techniques.

The spokes and or rim may be substantially topologically optimised.

As is commonly understood, topology is concerned with the geometric dimensions and properties of the shape of an object. Objects may be designed to satisfy mechanical requirements for loading, and to ensure components of an assembly or mechanism are each free to move as required.

Artificial intelligence Al (or in some cases Machine learning ML) computing techniques may be used to satisfy structural and mechanical point and dynamic loading requirements using a particular material whilst aiming to achieve a particular secondary goal, such as to minimise overall weight, remain within certain stress limits, account for particular thermal properties of the material, etc. Thus, after designing for a particular function, parts may go through a process of "topology optimisation" using Al to create an, often unusual, shape that would not otherwise have been designed. For example, the Al may be provided with instructions such as "never bend joint 1 more than X, nor have a stress more than Y whilst performing function Z".

In this way the wheel may be designed to minimise weight. Or the wheel may be designed to minimise material costs. Or the wheel may be designed to maximise strength.

At least a portion of the wheel may be made from plastic, polymer plastics, thermoset plastic, thermoplastic plastic, metals, aluminium, aluminium alloy, iron, iron alloy, steel, steel alloy, magnesium, magnesium alloy, titanium, titanium alloy, zinc, zinc alloy, fibre reinforced composite, carbon fibre, graphite fibre, glass fibre, natural fibre, plant fibre, plastic fibre, paper, cardboard, rubber, epoxy OR nylon.

The wheel may be made from a number of different materials. The materials listed here are not intended to be an exclusive list.

Use of a wheel, or a number of wheels as a set, may be, wherein the wheel or a set of wheels is used as a set of driven wheels on a load handling device, wherein the load handling device is operable on a grid framework storage system structure comprising: a first set of parallel rails or tracks (22b) and a second set of parallel rails or tracks (22a) extending substantially perpendicularly to the first set of rails or tracks (22b) in a substantially horizontal plane to form a grid pattern comprising a plurality of grid spaces, OR as a set of wheels on a flow racking system, wherein the set of wheels is attached to a tray or tote, OR as a set of wheels on a flow racking system, wherein the set of wheels are used as rollers in a track OR as a set of wheels in a caterpillar track.

The wheel may be suitable for use in a variety of MHE devices. The devices listed here are not intended to be an exclusive list.

For example, a load handling device may be provided for lifting and moving storage containers stacked in a grid framework structure comprising: a first set of parallel rails or tracks and a second set of parallel rails or tracks extending substantially perpendicularly to the first set of rails or tracks in a substantially horizontal plane to form a grid pattern comprising a plurality of grid spaces, wherein the grid is supported by a set of uprights to form a plurality of vertical storage locations beneath the grid for containers to be stacked between and be guided by the uprights in a vertical direction through the plurality of grid spaces, the load handling device comprises: a body mounted on a first set of wheels being arranged to engage with the first set of parallel tracks and a second set of wheels being arranged to engage with the second set of parallel tracks, wherein the first and second sets of wheels comprise wheels as defined above.

Advantageously, the wheels are designed to be lightweight, provide some shock absorption, provide some suspension to the load handling device, and reduce tyre wear. A further advantage of this arrangement is that an outer layer of the wheel may bend out of plane. This allows the wheel to tolerate, for example, misaligned sections of track and the width of the track is narrowed at the transition. Out of plane bending allows the wheel to squash and become momentarily narrower in a scenario like this, where a less deformable wheel would likely try to lift itself out of the track and derail.

In this way, the wheel displays characteristics which advantageously provide specific directional stiffness and strength and yet are able to absorb some vibrations as they move over the tracks. In particular, the design of the spoke network may be to keep torsional stiffness within specific bounds and thereby avoid inaccuracies in movement of the load handling device.

In this way, the wheels are able to generate good traction with the track, and minimise wheel slip. This allows the load handling device to be more accurately positionally controlled on the grid as drive movements result in more consistent and predictable movement of the load handling device.

In another example of the wheel may be used in flow racking. A further example of a wheel use may be in caterpillar tracks.

In this way the present invention addresses some of the problems of the prior art and provides a wheel for MHE, and uses of the wheel in MHE devices.

In this way, wheels may be designed for specific characteristics. In this way, wheels may be printed at or near the location they are required, and avoid a complicated supply chain.

### Detailed description

The invention will now be described with reference to the accompanying diagrammatic drawings in which:
Figure 1a is a planar view, and figure 1b is a perspective view, of a wheel having spokes for use on a load handling device;
Figure 2a is a planar view, and figure 2b is a perspective view, of a first-layer type of a wheel for use on a load handling device;
Figure 3a is a planar view, and figure 3b is a perspective view, of a second-layer type of a wheel for use on a load handling device;
Figures 4a and 4b show schematic force diagrams of part of a second-layer type of a wheel for use on a load handling device;
Figure 5 shows a drive assembly for use with a set of wheels;
Figure 6a is a top planar view, figure 6b is a perspective view, of a wheel having spokes for use on a load handling device, and figure 6c is an side view of a wheel comprising plural O-rings as tyres;
Figures 7a and 7b show schematic force diagrams of part of lattice-layer type of a wheel;
Figure 8a shows a plane view hub motor suitable for fitting a wheel of the type illustrated in figure 6, and figure 8b shows a side view of the hub motor;
Figure 9a shows plane view and figure 9b shows a side view of a wheel of the type illustrated in figure 6 fitted to a hub motor of the type illustrated in figure 8;
Figure 10 is a schematic, perspective view of a storage system comprising a plurality of load handler devices;
Figures 11 and 12 show a growth tray having wheels;
Figure 13 is a schematic view of a rack and tray system in use in a hydroponic growing system;
Figure 14 shows an exploded view of a wheel, showing each of the component parts;
Figure 15a shows a planar view of an assembled wheel, and figure 15b shows a sectional view of the wheel taken through line X-X;
Figure 16 shows the spring layer of a wheel, as a planar view fig. 16a and a perspective view fig. 16b;
Figure 17 shows a plane view of a wheel pulley layer; and
Figure 18 shows a wheel contact plate, as a planar view fig. 18a and a perspective view fig. 18b.

The present invention is directed to a wheel which may form part of larger MHE devices. It will be appreciated that the uses of the wheel are not limited to the examples given here.

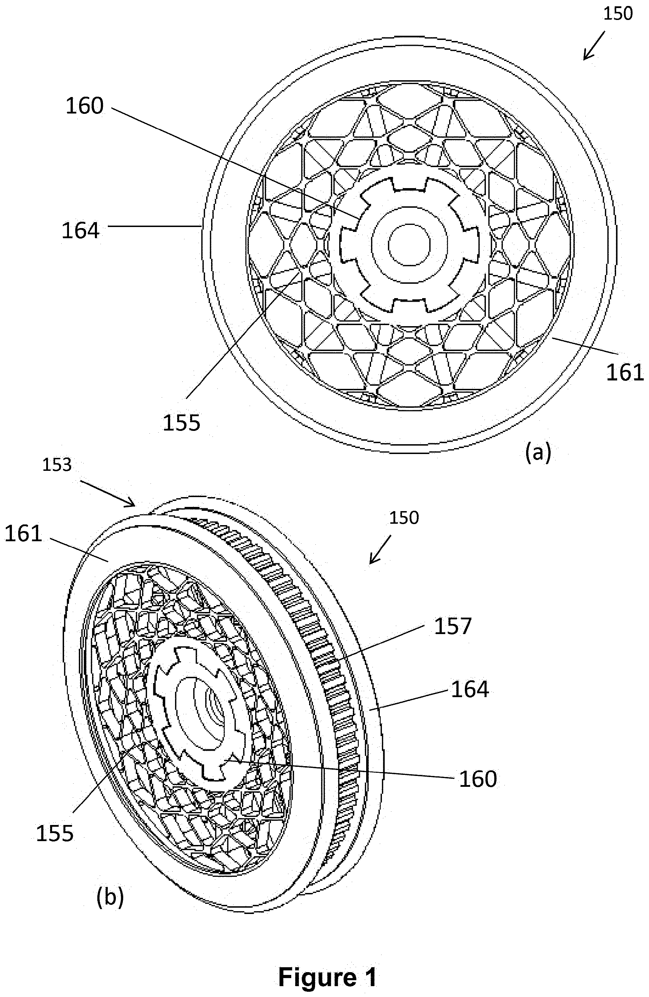

Figures 1-4 illustrate a wheel 150 for use on MHE, such as a load handling device, and suitable to be driven by a drive belt.

The wheel 150 has a sandwiched layer construction, with each layer imparting different optimised characteristics to the wheel. Between the hub and the rim, the spokes are arranged in a network 155.

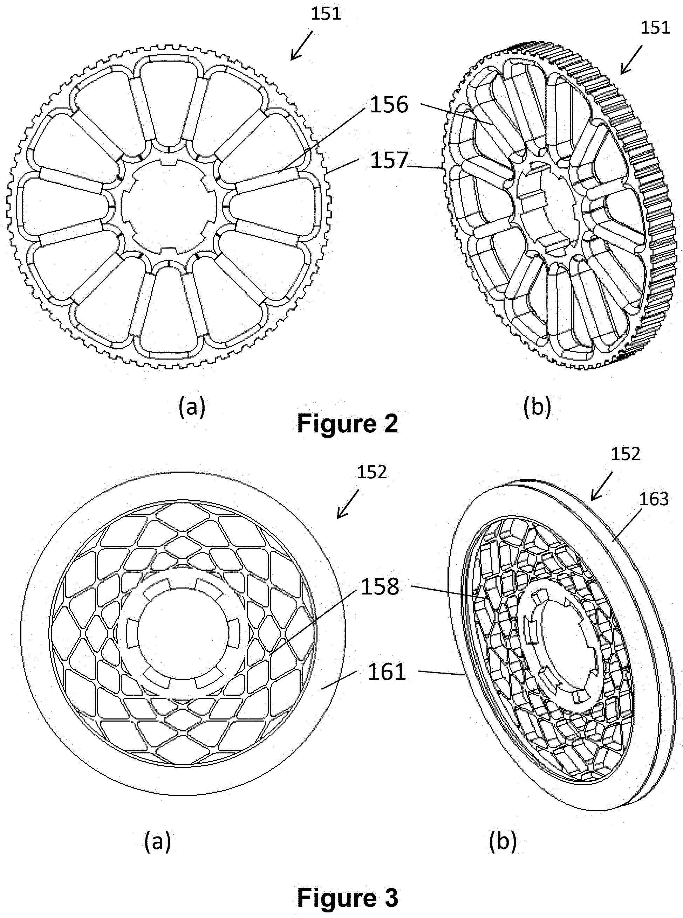

The central, inner or first-type layer 151 (figure 2) has a number of radial spokes 156 connecting the hub to the rim. The design of the central layer spokes is to optimise compressional strength. The rim has a plurality of gear teeth 157 for cooperating with a drive belt. The first-type layer 151 may be made from a stiff and load bearing material such as epoxy. Thus, the first-type layer 151 may be part of a drive train.

The outer or second-type layers 152 (figures 3) are fitted to each face of the central layer 151 and have slightly larger diameter than the central layer 151 to create a channel 153 therebetween, with the gear teeth 157 of the central layer 151 at the bottom of the channel 153. Thus, when a drive belt is received in the channel 153 it will tend to remain in position to engage with the gear teeth of the central layer 151.

The spokes 159 of the outer layers 152 are curved and arranged to form a mesh 158. A first set of spokes 159a is curved in a clockwise direction, and a second set of spokes 159b are curved in an anti-clockwise direction overlapping with the first set of spokes. The two sets of spokes are joined or used where they cross. The inner layer spoke arrangement is to optimise for torsional stiffness. The outer layer spoke arrangement is to maximise torsional stiffness while also allowing radial deflection. In some examples, the spoke arrangement for the inner layer and the outer layer may be the same shape. Generally, the inner layer, will be made from a stiffer material than the outer layer and with a thick shell or rim to reduce radial deflection.

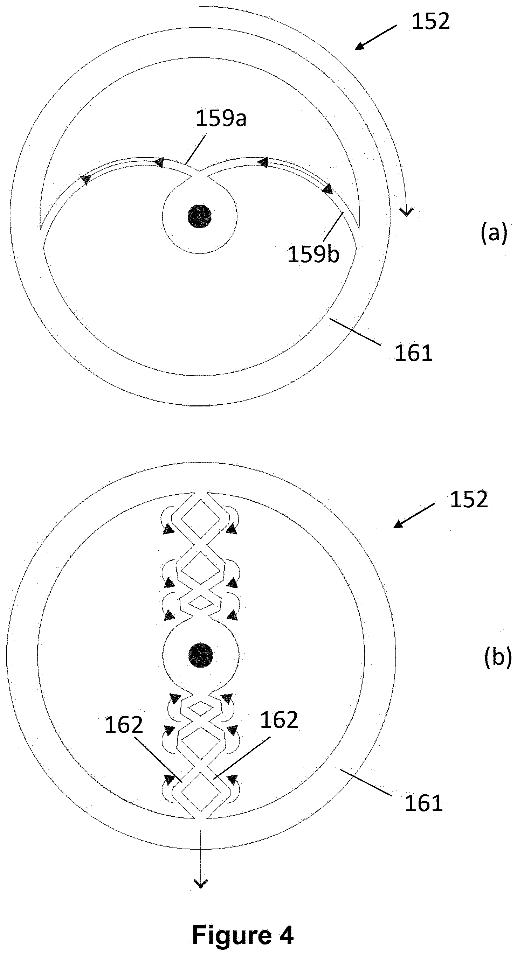

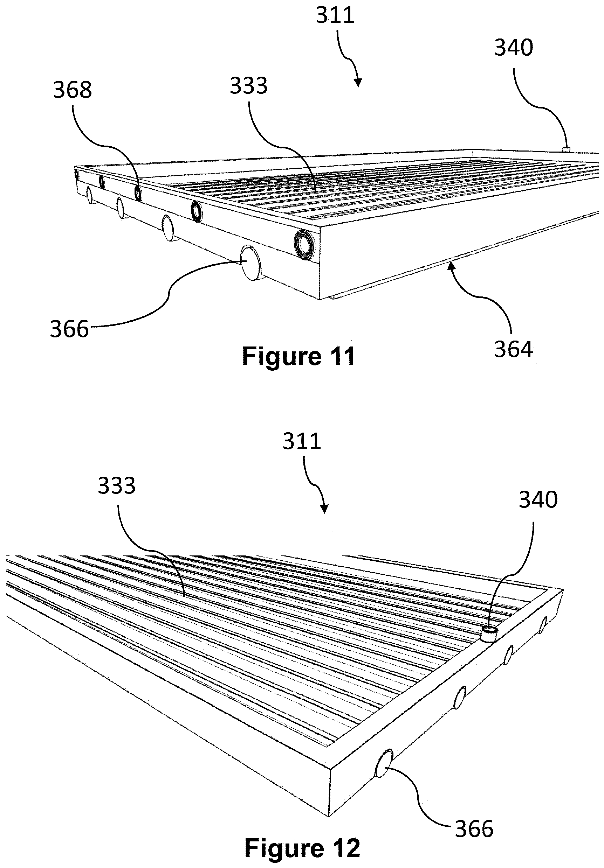

Figure 4 shows a portion of a spoke 159 of the wheel outer layer 152 of the type shown in figure 12. Further, figure 4 indicates force directions of the wheel in use. In figure 4a, for simplicity, a single clockwise curved spoke 159a and a single anti-clockwise curved spoke 159b are shown extending from the hub 160 to the rim 161. When a rotational force is applied to the wheel, as indicated by the arrow around the circumference of the wheel, the force is transmitted in the directions indicated along the spokes 159. In figure 4b, for simplicity, a radial portion of spoke mesh 158 is shown which comprises segments 162 between node points of several clockwise curved spokes 159a and a corresponding number of anti-clockwise curved spokes 159b. When a compressional force is applied to the second-type layer 152, as indicated by the downwards arrow at the bottom of the wheel, opposed rotational forces are transmitted at each node of the mesh section.

The rim 161 of outer layers 152 is deeper relative to the rim of the central or inner layer 151. The outer surface of the rim is angled relative to the plane of the wheel, each side forming one half of a "V" providing a relatively smooth surface. This helps to ensure that the wheels stay within the tracks or rails of the storage system grid, and run smoothly between grid spaces. The outer layer 152 may be made from a nylon material, to allow the outer layers 152 to flex and because of a relatively low coefficient of friction so that the rim slides or rolls smoothly along tracks or rails. The flexibility of the outer layer 152 provides the wheel 150 with a degree of shock absorption and suspension. The spoke mesh 158 may be considered a compliant mechanism. Thus, the outer layer may be known as a spring section.

At the circumference edge of the outer layers there is provided a groove 163 for receiving an O-ring 164. The O-ring 164 may be made of a relatively compliant material such as rubber for providing traction or grip between the wheels 150 and the track and for absorbing bumps in the track between grid spaces or at transitions between pieces of track. The O-ring 164 may be thought of as the tyre for the wheel 150. The flexibility of the outer layer 152 may decrease wear of the O-ring.

In addition to their different geometry, the central and outer layers may impart different characteristics through use of different materials. For example, the curved spokes may be made from a relatively flexible material compared with the radial spokes, to impart some suspension into the wheel - in addition to any suspension imparted by the O-ring. Further, the rim and hub may be made of relatively stiff material to support maintenance of the wheel shape.

A hub 160 is fitted through each of the layers of the wheel and at the centre has a bearing for rotatably mounting the wheel 150 to an axle on a load handling device or other MHE. This allows the wheels 150 to be readily interchanged should they become worn out or damaged during use.

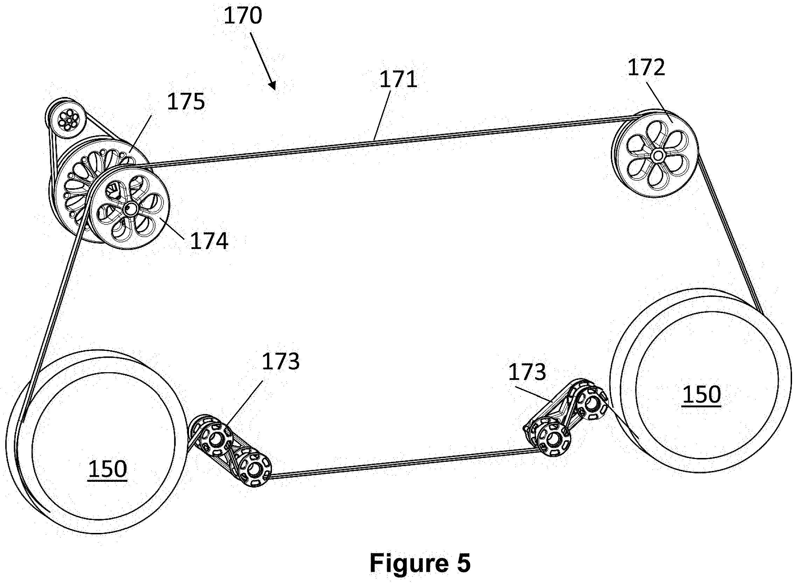

A drive belt assembly 170 is illustrated in figure 5, to drive two wheels 150. Drive belt assemblies 170 may be used on MHE devices. The drive assembly 170 comprises a drive belt 171 pulley gear arrangement for engaging with the toothed edge of a pair of wheels 116, 118 on one side of the load handling device 100. A toothed drive belt 171 engages with both of the wheels 150. The drive belt 171 is guided by a slave-wheel 172 mounted on the load handling device skeleton 102, and two tensioning wheel arrangements 173. The tensioning wheel arrangements 173 are movably mounted to the MHE, and are intended to keep the drive belt 171 taut and maintain engagement of the drive belt 171 with the wheels 150. A drive wheel 174 is provided, mounted to the load handling device skeleton 102. As is known, ideally for a belt drive assembly to be effective, six teeth between the drive belt and the drive wheel should be in contact. This may be ensured by including additional wheels to provide a mega-drive assembly. During operation of the drive arrangement 270, the drive belt 271 is driven by drive wheel 275.

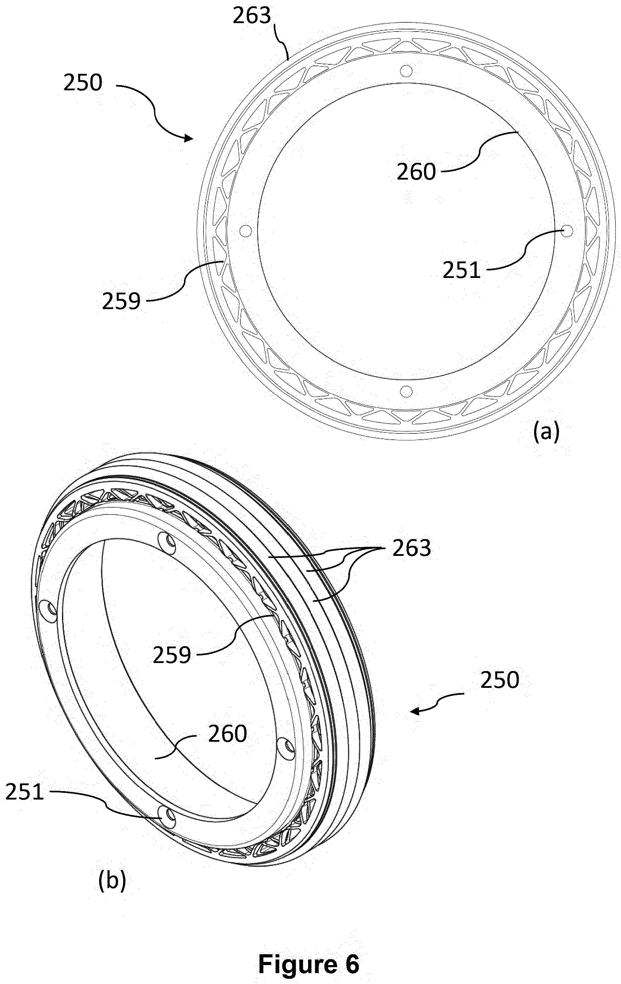

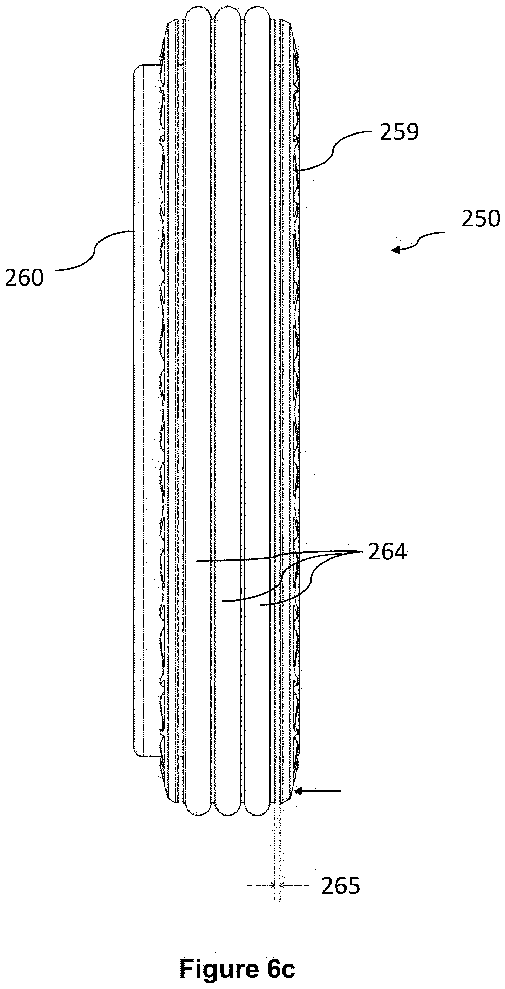

Figures 6-9 illustrate an alternative wheel design 250 for use on MHE. The wheel 250 is intended to be suitable for use with a hub motor. As illustrated, the hub 260 has a relatively large diameter for receiving the hub motor. As a result, the distance between the hub 260 and the rim is reduced, and the spokes 259 are limited to a relatively slim band between the hub 260 and the rim.

The rim of the hub 260 is relatively broad and comprises a number of attachment points 251 for fixing the wheel 250 to a hub motor.

The spokes 259 are arranged to form a truss structure. The spokes 259 may be straight or curved, alternating clockwise and anticlockwise. In some arrangements, the spokes 259 may be arranged as two overlapping and oppositely oriented part-spiral segments. The spoke arrangement is to maximise torsional stiffness while also allowing radial deflection.

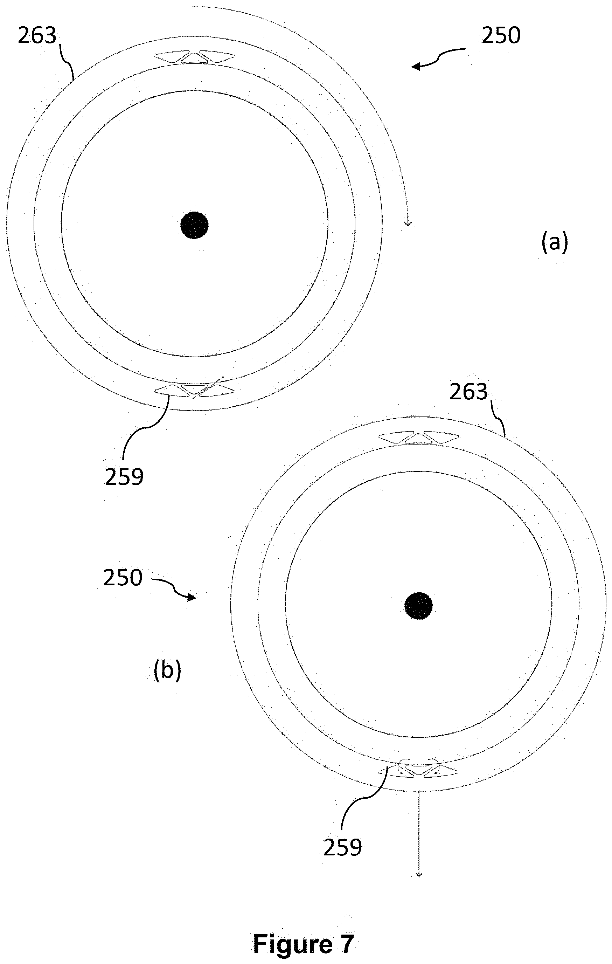

Figure 7 shows a portion of a spoke 259 arrangement of the wheel outer layer 152 of the type shown in figure 6. Further, figure 7 indicates force directions of the wheel in use. For simplicity, only a small portion of the spokes 259 are shown, similarly to figure 4. Referring to figure 7a, when a rotational force is applied to the wheel, as indicated by the arrow around the circumference of the wheel, the force is transmitted in the directions indicated along the spokes 159. Referring to figure 7b, when a compressional force is applied as indicated by the downwards arrow at the bottom of the wheel opposed rotational forces are transmitted through each node where the spokes 259 join to the hub rim.

At the circumference edge of the wheel 250 there is provided a series of grooves 263 for receiving a corresponding number of O-rings 264. The O-rings 164 may be made of a relatively compliant material such as rubber for providing traction or grip between the wheels 250 and the track and for absorbing bumps in the track between grid spaces. The O-rings 264 may be thought of as the tyre for the wheel 250. The flexibility of the wheel 250 may decrease wear of the O-rings 264 in use.

The wheel 250 may be made from a single layer, or the wheel 250 may have a sandwiched layer construction, similarly to the wheel 150.

As can be seen in figure 6c, considering the wheel 250 in the radial direction between the O-ring 263 tyres and the outer plane of the wheel, there is a slim sandwiched layer 265 providing a gap between the tyres or main body of the wheel 250 and the outer edge plane. This gap allows the wheel 250 to be deformed or "squashed" into a narrower track.

Wheels 250 of the type described in connection with figures 6 and 7 are suitable for being driven by a hub motors. Accordingly, wheels of this type would have a direct drive arrangement in use, rather than the belt drive arrangements described elsewhere in this disclosure.

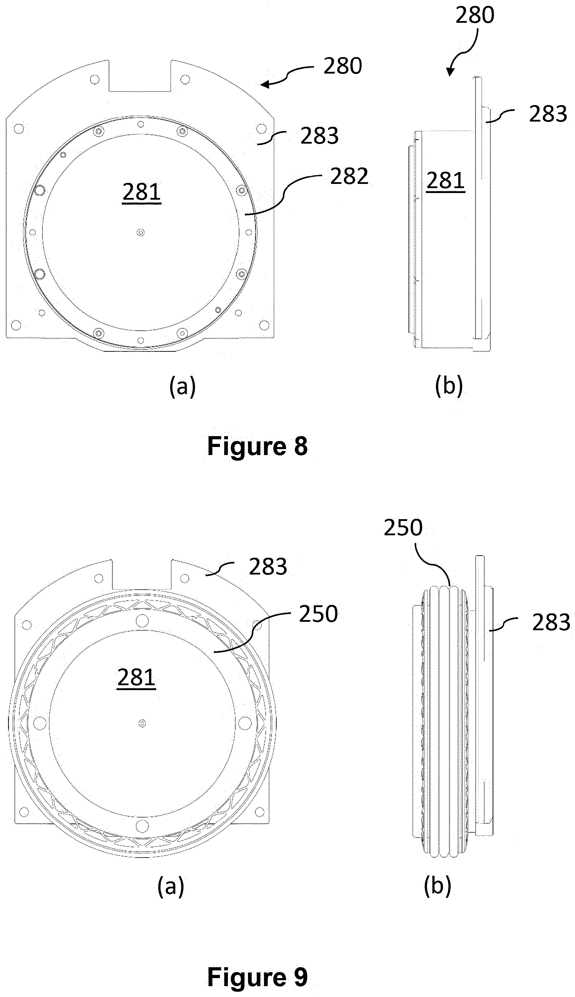

Figure 8 illustrates a hub motor 280 suitable for use with the wheels 250, and figure 9 illustrates the hub motor 280 with a wheel 250 mounted thereon. The hub motor 280 comprises a motor 281, a wheel mount 282 and a mounting plate 283 for mounting the hub motor 280 on to a vehicle.

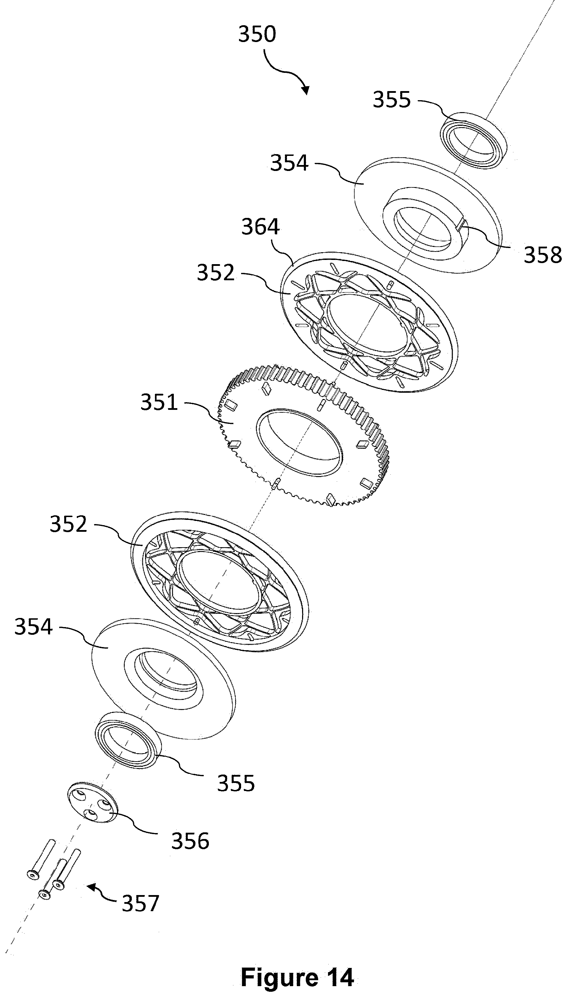

Figures 14-18 illustrate another alternative wheel design 350 for use as the first and second wheel sets 116, 118 on a load handling device as described here.

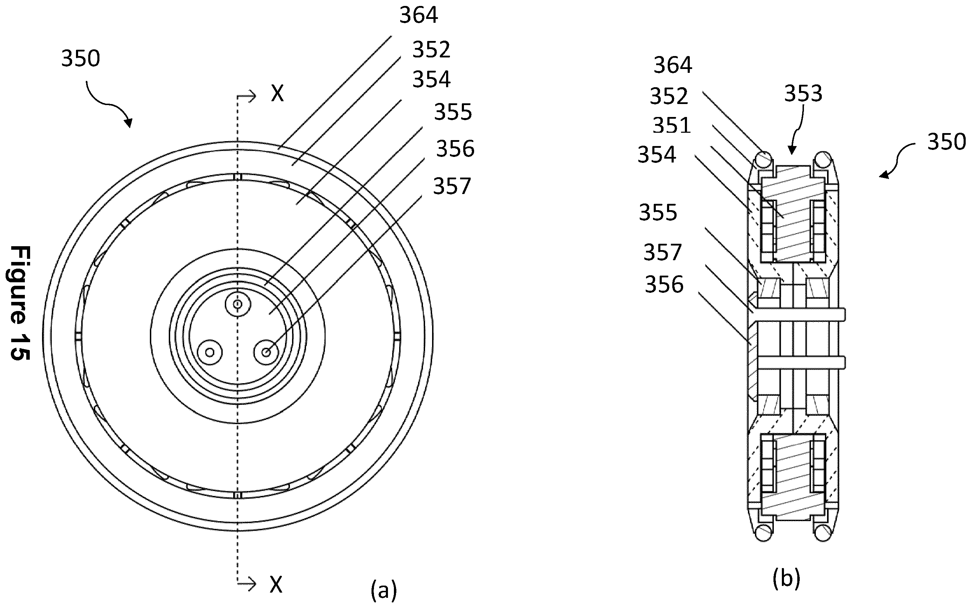

Figure 14 shows an exploded view of a wheel 350, showing each of the component parts. Starting from substantially the centre, the wheel 350 comprises a pulley 351. Spring sections or layers 352 are mounted to each face of the pulley 351, and an O-ring 364 is fitted to the rim of spring section 352. First and second torque limiting or contact plates 354 are then fitted together through the central hub of the pulley 351 and spring sections 352. First and second bearings 355 are fitted into the contact plates 354. Finally, a front cap plate 356 is fitted over the bearings 355 and affixed with screws or bolts 357 in to a rear cap plate (not shown). Figure 15a shows a planar view of the assembled wheel 350, and figure 15b shows a sectional view of the wheel 350 taken through line X-X of fig. 15a. As may be seen in the sectional view, a channel 353 is located between the O-rings 364. As discussed herein, the channel 353 may receive a drive belt which engages with the teeth of the pulley 351 to drive the wheel 350. As discussed above, the O-rings 364 engage with a track or surface to support the load handling device to which they are attached.

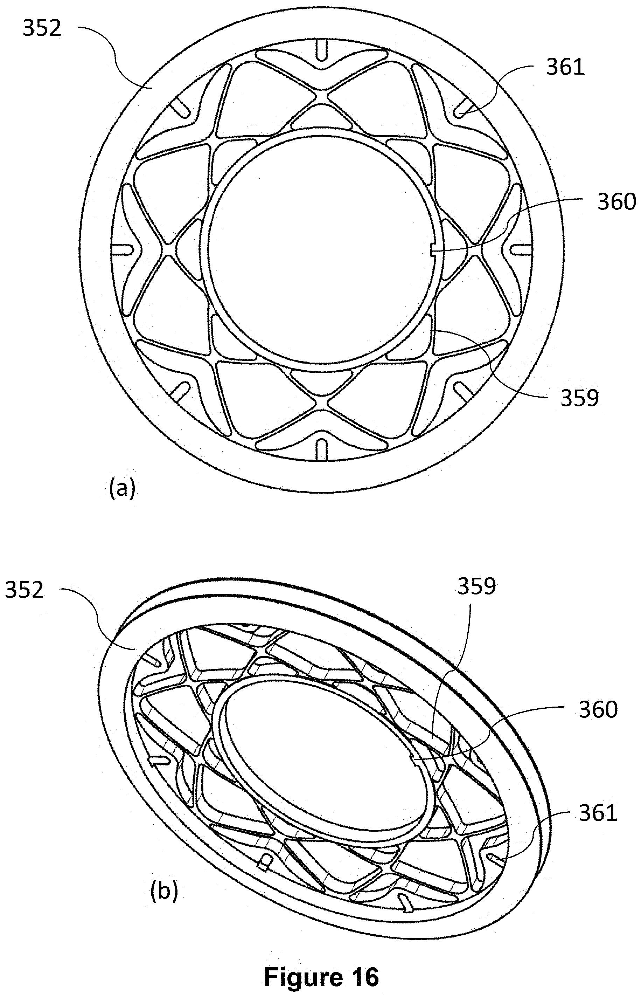

Figure 16 shows the spring layer 352 of the wheel 350 in more detail, as a planar view fig. 16a and a perspective view fig. 16b. Similarly to wheels 150, 250 described above, the spokes 359 are curved in clockwise and anticlockwise directions to form a network or mesh for transferring forces between the rub and the rim. The spring layer 352 will be made from a resilient material, thus, enabling the spring layer 352 to bend and deform. The inside circumference of the spring layer 352 comprises a notch 360 which locates in a groove 358 of the contact plates 354. Further, towards the outside edge of the spoke section, the spring layer 352 comprises a number of regularly spaced grooves 361 for fitting together with similarly spaced protrusions 362 on the front and back faces of the pulley 351, seen in fig.s 14 and 17. It will be appreciated that the groove and notch or protraction pairs ensure that the wheel is properly aligned when assembled and may be quickly assembled by hand, by a technician for example.

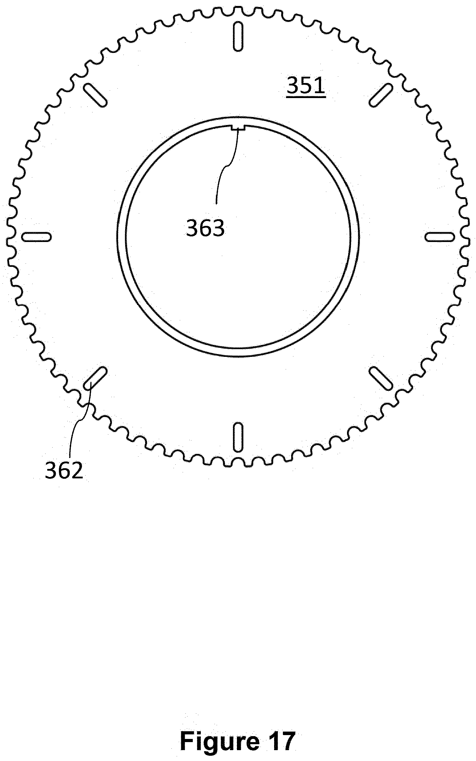

Figure 17 which shows the pulley layer 351 in plane view and more detail, where the cog teeth around the circumference; protrusions 362 slightly inside the circumference and regularly spaced around the face; and a notch 363 for locating in the groove 358 of the contact plates 354 (similarly to the notch 360).

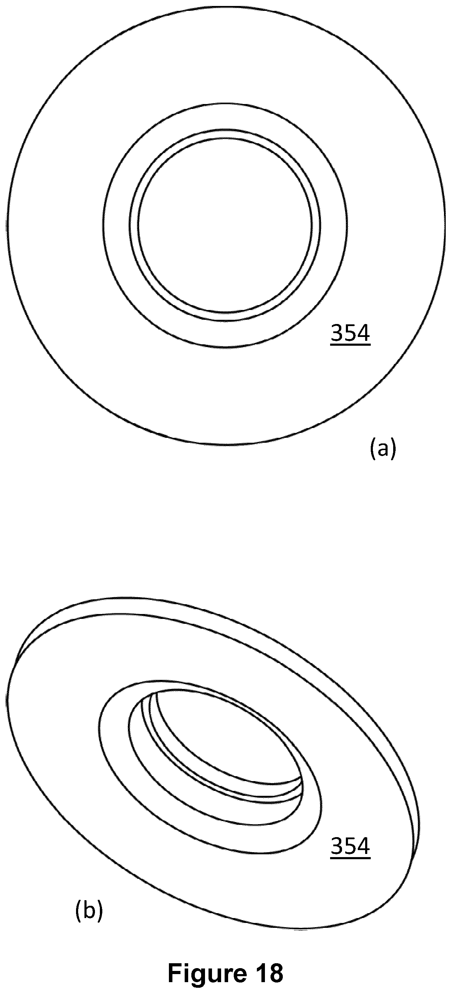

Finally, figure 18 shows the contact plate 354, as a planar view fig. 18a and a perspective view fig. 18b. It will be appreciated that the contact plate 354 limits the outward being of the spring section 352. Further, the contact plate 354 assists in preventing the spokes 359 from catching on nearby objects.

Referring back to fig. 15a it will be appreciated that the diameter of the contract plate 354 is slightly smaller than the diameter of the spoke section. In this way, the rim of the wheel 350 may be allowed to deflect inwards, for example, to compensate for narrowing or misalignment of the track.

It will be appreciated that the notches 360, 363 and groove 358, and the grooves 361 and protrusions 362 assist in properly aligning the layers of the wheel 350, and ensuring that a drive force applied to the circumferential cog teeth of the pulley 352 is transferred to the spring layers 352 for driving a load handling device.

It will be appreciated that MHE is used extensively in automated or semi-automated systems, for example storage and retrieval systems.

EP 1037828 B1 (Autostore) describes a system in which stacks of containers are arranged within a frame structure. Robotic load handling devices can be controllably moved around the stack on a system of tracks on the uppermost surface of the stack.

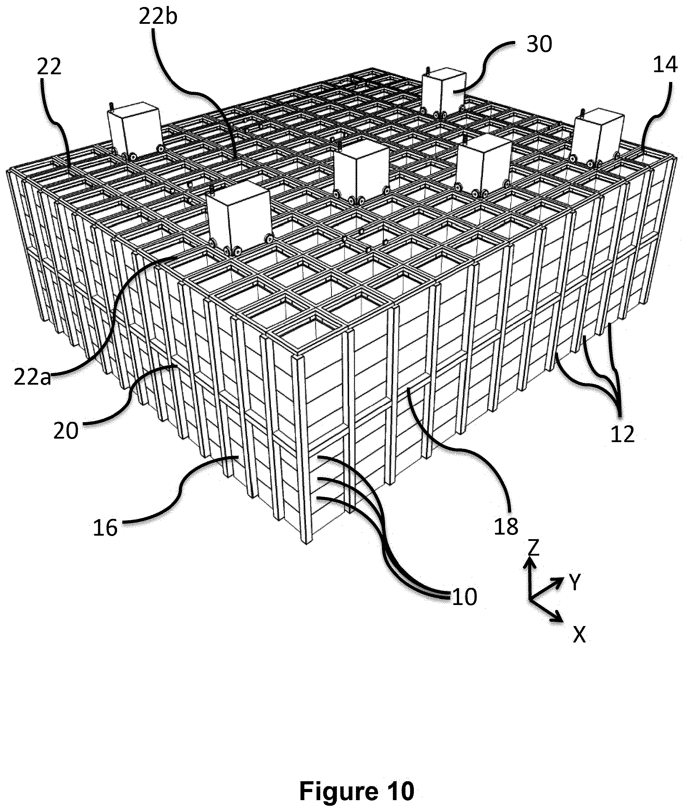

A load handling device is described in UK Patent Application No. GB2520104A - Ocado Innovation Limited, the contents of which are incorporated herein by reference - where each robotic load handler only covers one grid space, thus allowing high density of load handlers and thus high throughput of a given size system. A system of this type is illustrated schematically in Figure 10 of the accompanying drawings.

As shown in figure 10, a framework 14 comprises a plurality of upright members 16 that support horizontal members 18, 20. A first set of parallel horizontal members 18 is arranged perpendicularly to a second set of parallel horizontal members 20 to form a plurality of horizontal grid structures supported by the upright members 16. The members 16, 18, 20 are typically manufactured from metal. The bins 10 are stacked between the members 16, 18, 20 of the framework 14, so that the framework 14 guards against horizontal movement of the stacks 12 of bins 10, and guides vertical movement of the bins 10.

Each load handling device 30 comprises a vehicle which is arranged to travel in the X and Y directions on the rails 22 of the framework 14, above the stacks 12. A first set of wheels, consisting of a pair of wheels on the front of the vehicle and a pair of wheels on the back of the vehicle, are arranged to engage with two adjacent rails of the first set 22a of rails 22. Similarly, a second set of wheels, consisting of a pair of wheels on each side of the vehicle, are arranged to engage with two adjacent rails of the second set 22b of rails 22. In this way, one or more robotic load handling devices 30 can move around the top surface of the stacks 12 on the framework 14, as shown in Figure 10.

Another example of use of MHE is in flow racking.

One field in which flow racking has been used is indoor farming. GB1918020.7 Storage, Growing Systems and Methods, Ocado Innovations Ltd., the contents of which are incorporated herein by reference, describes improvements in growth trays used in indoor farming. As may be seen in figures 11 and 12, the wheels 366 are set into the body of the growth tray 311. A power supply may be controlled by a central control system to move the tray along a rack as the crop grows, for example via inductive loops 368. The central control system may control where the growth tray(s) 311 are located along the rack, movement of the growth tray(s) 311 along the rack and the growing environment for the crop. It will be appreciated that the wheels disclosed herein may be used on growth trays or support vehicles.

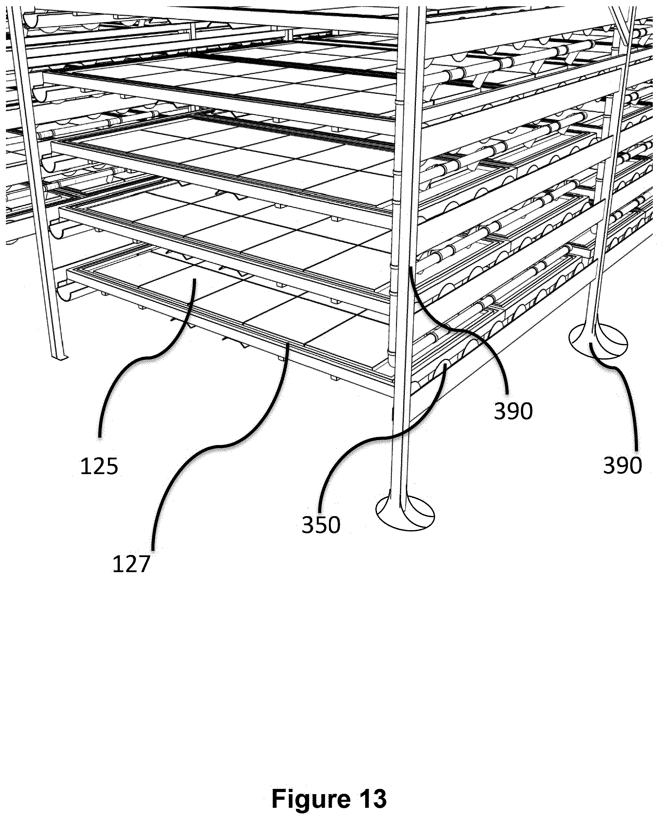

WO2020030825 Hydroponics Growing System and Method, Ocado Innovations Ltd., the contents of which are incorporated herein by reference, describes methods and apparatus for an indoor farm. As illustrated in figure 13, Support vehicles 127 each contain one or more growing trays 125 which may contain a growing medium for growing a crop. A support structure such as a frame or rack 390 having a plurality of vertically spaced levels is provided for the vehicles 127 and trays 125. Each level of the rack 390 may comprise a guideway such as a path or track along which the support vehicles 127 are arranged to be conveyed, aided by wheels 350. A drive unit (not shown) is arranged to move the support vehicles 127 from an initial position to a final position on the track during growth of the crop.

It will be appreciated that the wheels described herein, may be used as wheels 350 in the farming system.

Another use MHE use of the wheel disclosed herein might be in caterpillar tracks.

It will be appreciated that MHE environments are not limited to automated or semi-automated storage and retrieval grocery systems nor indoor farming. For example, MHE technology and wheel improvements can be applied to shipping, baggage handling, vehicle parking, indoor or hydroponic greenhouses and farming, modular buildings, self-storage facilities, cargo handling, transport switchyards, manufacturing facilities, pallet handling, parcel sortation, airport logistics (ULD) and general logistics to name but a few possible applications. It will be appreciated that different types of systems and equipment will have different technical requirements.

It will be appreciated that while certain features of the wheel have been described in connection with figures 1-5 and other features have been described in connection with figures 6-9, and further features in connection with figures 14-18, a combination of features from any of the figures and related description are anticipated by the inventors. For example, a belt driven wheel may comprise plural O-ring tyres, or a hub motor driven wheel may have a layered construction.

In a variation to the wheels 150, 250, 350 illustrated and described, it will be appreciated that the wheel may be asymmetric along the axis, that is, the wheel may comprise a spring layer only on one side of the support or pulley layer, for example.

It will be appreciated that the load handling device may comprise all, one or any combination of the features described above and that it is not essential to the invention for the service device to include all the sensors and features described.

It is envisaged that any one or more of the variations described in the foregoing paragraphs may be implemented in the same embodiment of a load-handling device.

In this document, the word "connect" and its derivatives are intended to include the possibilities of direct and indirection connection. For example, "*x* is connected to *y*" is intended to include the
possibility that *x* is directly connected to y, with no intervening components, and the possibility that *x* is indirectly connected to *y*, with one or more intervening components. Where a direct connection is intended, the words "directly connected", "direct connection" or similar will be used. Similarly, the word "support" and its derivatives are intended to include the possibilities of direct and indirect contact. For example, "x supports *y*" is intended to include the possibility that *x* directly supports and directly contacts *y,* with no intervening components, and the possibility that *x* indirectly supports *y,* with one or more intervening components contacting *x* and/or *y*.

In this document, the word "comprise" and its derivatives are intended to have an inclusive rather than an exclusive meaning. For example, "*x* comprises *y*" is intended to include the possibilities that x includes one and only one *y*, multiple *y*'s, or one or more *y*'s and one or more other elements. Where an exclusive meaning is intended, the language "*x* is composed of *y*" will be used, meaning that *x* includes only *y* and nothing else.

Many variations and modifications not explicitly described above are also possible without departing from the scope of the invention as defined in the appended claims.

## Claims

1. A wheel (150, 250, 350) for MHE material handling equipment comprising:
a hub (160); a rim (161); and spokes, wherein the spokes supportively connect the rim to the hub, wherein the spokes are arranged in a network (155) and least some of the spokes are curved, and wherein at least a portion of the spokes are made from a compliant material relative to the material of the rim and or the hub, **characterized in that** the wheel comprises two or more layers, a first-type layer (151) layered with at least one second-type layer (152) of spokes where the second-type layer has curved spokes; wherein the rim comprises a channel (153) for receiving a drive belt, OR wherein the hub is for receiving a direct drive motor.

2. A wheel according to any preceding claim, wherein at least a portion of the spoke network is deformable and or compressible.

3. A wheel according to any preceding claim, wherein the spokes comprise a first set curved in a clockwise direction, and a second set curved in an anti-clockwise direction.

4. A wheel according to any preceding claim, wherein the spoke network is optimised for torsional stiffness.

5. A wheel according to any preceding claim, wherein the rim sides are angled relative to the plane of the wheel.

6. A wheel according to any preceding claim, wherein the rim comprises a groove (163, 263) for receiving a tyre.

7. A wheel according to claim 6, wherein the groove is for receiving one or more O-rings (164).

8. A wheel according to any preceding claim, wherein the spoke network is optimised to minimise backlash between forward and reverse drive directions.

9. A wheel according to any preceding claim, wherein the spoke material is polyurethane or Nylon (RTM), and the hub and rim material is Nylon (RTM).

10. A wheel according to any preceding claim, wherein the wheel is 3-D printed.

11. A wheel according to any preceding claim, wherein the spokes and or rim are substantially topologically optimised.

12. A wheel according to any preceding claim, wherein at least a portion of the wheel is made from plastic, polymer plastics, thermoset plastic, thermoplastic plastic, metals, aluminium, aluminium alloy, iron, iron alloy, steel, steel alloy, magnesium, magnesium alloy, titanium, titanium alloy, zinc, zinc alloy, fibre reinforced composite, carbon fibre, graphite fibre, glass fibre, natural fibre, plant fibre, plastic fibre, paper, cardboard, rubber, epoxy OR Nylon (RTM).

13. Use of a wheel, or a number of wheels as a set, according to any preceding claim, wherein the wheel or a set of wheels is used
as a set of driven wheels on a load handling device (30), wherein the load handling device is operable on a grid framework storage system structure comprising: a first set of parallel rails or tracks (22b) and a second set of parallel rails or tracks (22a) extending substantially perpendicularly to the first set of rails or tracks (22b) in a substantially horizontal plane to form a grid pattern comprising a plurality of grid spaces, OR
as a set of wheels on a flow racking system (311), wherein the set of wheels is attached to a tray or tote, OR
as a set of wheels on a flow racking system, wherein the set of wheels are used as rollers in a track OR
as a set of wheels in a caterpillar track.

## Patentansprüche

1. Rad (150, 250, 350) für MHE-Materialhandhabungsgeräte, umfassend:
eine Nabe (160); eine Felge (161); und Speichen, wobei die Speichen die Felge stützend mit der Nabe verbinden, wobei die Speichen in einem Netzwerk (155) angeordnet sind und mindestens einige der Speichen gekrümmt sind, und wobei mindestens ein Teil der Speichen relativ zu dem Material der Felge und oder der Nabe aus einem nachgiebigen Material hergestellt ist, **dadurch gekennzeichnet, dass** das Rad zwei oder mehr Schichten umfasst, eine Schicht (151) einer ersten Art, die mit mindestens einer Schicht (152) einer zweiten Art von Speichen geschichtet ist, wobei die Schicht der zweiten Art gekrümmte Speichen aufweist; wobei die Felge einen Kanal (153) zum Aufnehmen eines Antriebsriemens umfasst, ODER wobei die Nabe zum Aufnehmen eines Direktantriebsmotors dient.

2. Rad nach einem der vorhergehenden Ansprüche, wobei mindestens ein Teil des Speichennetzwerks verformbar und oder komprimierbar ist.

3. Rad nach einem der vorhergehenden Ansprüche, wobei die Speichen einen im Uhrzeigersinn gekrümmten ersten Satz und einen gegen den Uhrzeigersinn gekrümmten zweiten Satz umfassen.

4. Rad nach einem der vorhergehenden Ansprüche, wobei das Speichennetzwerk auf Torsionssteifigkeit optimiert ist.

5. Rad nach einem der vorhergehenden Ansprüche, wobei die Felgenseiten relativ zur Ebene des Rades abgewinkelt sind.

6. Rad nach einem der vorhergehenden Ansprüche, wobei die Felge eine Nut (163, 263) zum Aufnehmen eines Reifens umfasst.

7. Rad nach Anspruch 6, wobei die Nut zum Aufnehmen eines oder mehrerer O-Ringe (164) dient.

8. Rad nach einem der vorhergehenden Ansprüche, wobei das Speichennetzwerk optimiert ist, um Spiel zwischen Vorwärts- und Rückwärtsantriebsrichtungen zu minimieren.

9. Rad nach einem der vorhergehenden Ansprüche, wobei das Speichenmaterial Polyurethan oder Nylon (RTM) ist und das Naben- und Felgenmaterial Nylon (RTM) ist.

10. Rad nach einem der vorhergehenden Ansprüche, wobei das Rad 3D-gedruckt ist.

11. Rad nach einem der vorhergehenden Ansprüche, wobei die Speichen und oder die Felge im Wesentlichen topologisch optimiert sind.

12. Rad nach einem der vorhergehenden Ansprüche, wobei mindestens ein Teil des Rades aus Kunststoff, Polymerkunststoffen, duroplastischem Kunststoff, thermoplastischem Kunststoff, Metallen, Aluminium, Aluminiumlegierung, Eisen, Eisenlegierung, Stahl, Stahllegierung, Magnesium, Magnesiumlegierung, Titan, Titanlegierung, Zink, Zinklegierung, faserverstärktem Verbundwerkstoff, Kohlenstofffaser, Graphitfaser, Glasfaser, Naturfaser, Pflanzenfaser, Kunststofffaser, Papier, Pappe, Gummi, Epoxidharz ODER Nylon (RTM) hergestellt ist.

13. Verwendung eines Rades, oder einer Anzahl von Rädern als ein Satz, nach einem der vorhergehenden Ansprüche, wobei das Rad oder ein Satz von Rädern verwendet wird
als ein Satz von angetriebenen Rädern an einem Lasthandhabungsgerät (30), wobei das Lasthandhabungsgerät auf einer Gitterrahmen-Lagersystemkonstruktion betreibbar ist, umfassend: einen ersten Satz von parallelen Schienen oder Spuren (22b) und einen zweiten Satz von parallelen Schienen oder Spuren (22a), die sich im Wesentlichen senkrecht zu dem ersten Satz von Schienen oder Spuren (22b) in einer im Wesentlichen horizontalen Ebene erstrecken, um ein Gittermuster zu bilden, das eine Vielzahl von Gitterräumen umfasst, ODER
als ein Satz von Rädern an einem Durchlaufregalsystem (311), wobei der Satz von Rädern an einem Tablett oder Behälter angebracht ist, ODER
als ein Satz von Rädern an einem Durchlaufregalsystem, wobei der Satz von Rädern als Rollen in einer Spur verwendet wird ODER als ein Satz von Rädern in einer Raupenkette.

## Revendications

1. Roue (150, 250, 350) pour équipement de manutention de matériaux MHE comprenant :
un moyeu (160) ; une jante (161) ; et des rayons, dans laquelle les rayons relient la jante au moyeu de manière à la supporter, dans laquelle les rayons sont agencés en réseau (155) et au moins certains des rayons sont incurvés, et dans laquelle au moins une partie des rayons sont constitués d'un matériau souple par rapport au matériau de la jante et/ou du moyeu, **caractérisée en ce que** la roue comprend deux couches ou plus, une couche d'un premier type (151) en superposition avec au moins une couche d'un second type (152) de rayons, la couche de second type présentant des rayons incurvés ; dans laquelle la jante comprend un canal (153) destiné à recevoir une courroie d'entraînement, OU dans laquelle le moyeu est destiné à recevoir un moteur à entraînement direct.

2. Roue selon une quelconque revendication précédente, dans laquelle au moins une partie du réseau de rayons est déformable et/ou compressible.

3. Roue selon une quelconque revendication précédente, dans laquelle les rayons comprennent un premier ensemble incurvé dans le sens horaire et un second ensemble incurvé dans le sens antihoraire.

4. Roue selon une quelconque revendication précédente, dans laquelle le réseau de rayons est optimisé pour une rigidité en torsion.

5. Roue selon une quelconque revendication précédente, dans laquelle les côtés de la jante sont inclinés par rapport au plan de la roue.

6. Roue selon une quelconque revendication précédente, dans laquelle la jante comprend une rainure (163, 263) destinée à recevoir un pneu.

7. Roue selon la revendication 6, dans laquelle la rainure est destinée à recevoir un ou plusieurs joints toriques (164).

8. Roue selon une quelconque revendication précédente, dans laquelle le réseau de rayons est optimisé pour minimiser le jeu entre les sens d'entraînement avant et arrière.

9. Roue selon une quelconque revendication précédente, dans laquelle le matériau des rayons est du polyuréthane ou du nylon (RTM) , et le matériau du moyeu et de la jante est du nylon (RTM) .

10. Roue selon une quelconque revendication précédente, dans laquelle la roue est imprimée en 3D.

11. Roue selon une quelconque revendication précédente, dans laquelle les rayons et/ou la jante sont sensiblement optimisés topologiquement.

12. Roue selon une quelconque revendication précédente, dans laquelle au moins une partie de la roue est constituée de matière plastique, de matières plastiques polymères, de matières plastiques thermodurcissables, de matières plastiques thermoplastiques, de métaux, d'aluminium, d'alliage d'aluminium, de fer, d'alliage de fer, d'acier, d'alliage d'acier, de magnésium, d'alliage de magnésium, de titane, d'alliage de titane, de zinc, d'alliage de zinc, de composite renforcé par des fibres, de fibres de carbone, de fibres de graphite, de fibres de verre, de fibres naturelles, de fibres végétales, de fibres plastiques, de papier, de carton, de caoutchouc, d'époxy OU de nylon (RTM).

13. Utilisation d'une roue, ou d'un certain nombre de roues en tant qu'ensemble, selon une quelconque revendication précédente, dans laquelle la roue ou un ensemble de roues est utilisé
en tant qu'ensemble de roues motrices sur un dispositif de manutention de charges (30), dans lequel le dispositif de manutention de charges est utilisable sur une structure de système de stockage à ossature de réseau comprenant : un premier ensemble de rails ou de voies parallèles (22b) et un second ensemble de rails ou de voies parallèles (22a) s'étendant sensiblement perpendiculairement au premier ensemble de rails ou de voies (22b) dans un plan sensiblement horizontal pour former un motif de réseau comprenant une pluralité d'espaces de réseaux, OU
en tant qu'ensemble de roues sur un système de rayonnage dynamique (311), dans laquelle l'ensemble de roues est fixé à un plateau ou à un bac, OU
en tant qu'ensemble de roues sur un système de rayonnage dynamique, dans laquelle l'ensemble de roues sont utilisées comme rouleaux dans une voie OU
en tant qu'ensemble de roues dans une voie à chenilles.
